# FASCICULE DE BREVET EUROPEEN

(11) **EP 2 958 779 B1**
(45) Date de publication et mention de la délivrance du brevet: **15.03.2017**
(21) Numéro de dépôt: 14713176.7
(22) Date de dépôt: 25.02.2014
(51) Int. Cl.: B60T 13/58, B60T 13/66, B60T 13/74

(54) **SYSTÈME DE FREINAGE D'UN VÉHICULE**
FAHRZEUGBREMSSYSTEM
VEHICLE BRAKE SYSTEM

(30) Priorité: 25.02.2013 FR 1351625
(43) Date de publication de la demande: 30.12.2015
(73) Titulaire: Commissariat à l'Energie Atomique et aux Energies Alternatives, 75015 Paris (FR)
(72) Inventeur: GRANGETTE, Fabien, 43200 Yssingeaux (FR); CHATROUX, Daniel, F-38470 Teche (FR); DESBOIS-RENAUDIN, Matthieu, F-38250 Villard De Lans (FR)
(74) Mandataire: Thibon, Laurent
(86) Numéro de dépôt international: PCT/FR2014/050393
(87) Numéro de publication internationale: WO 2014/128425

(56) Documents cités:
- WO-A1-2007/014952
- WO-A2-2010/146158
- WO-A2-2012/079801
- DE-A1- 19 620 344
- DE-A1-102009 008 944
- DE-A1-102011 017 436
- DE-A1-102011 077 786
- US-A1- 2012 007 417

## Description

### Domaine

La présente description concerne un système de freinage d'un véhicule, notamment un véhicule automobile, comprenant un dispositif d'assistance au freinage.

### Exposé de l'art antérieur

Dans la majorité des véhicules classiques, le système de freinage des roues du véhicule comprend, pour chaque roue, un frein à tambour ou à disque commandé par un circuit hydraulique. Sur les véhicules les plus anciens, le circuit hydraulique comprend un maître-cylindre commandé directement par la pédale de frein. La force de freinage appliquée par chaque frein est alors directement liée à la force exercée par le conducteur sur la pédale de frein.

Sur des véhicules plus récents, un dispositif d'assistance au freinage est prévu entre la pédale de frein et le maître-cylindre pour amplifier la force exercée par le conducteur sur la pédale de frein. Le dispositif d'assistance au freinage peut utiliser une source d'énergie supplémentaire, par exemple pneumatique, qui s'ajoute à l'énergie fournie par le conducteur lorsqu'il appuie sur la pédale de frein. A titre d'exemple, le dispositif d'assistance au freinage peut comprendre un servofrein à dépression, par exemple du type Mastervac, dont le fonctionnement nécessite une source de dépression. La source d'énergie pneumatique peut correspondre à la dépression régnant dans la conduite d'admission d'un moteur à essence ou à la dépression fournie par une pompe à vide, par exemple pour un véhicule comprenant un moteur de type diesel ou pour un véhicule électrique.

Le document WO 2010/146158 décrit un système de freinage dans lequel un frein de véhicule automobile peut être actionné simultanément par un circuit de freinage hydraulique et par un actionneur électromécanique.

### Résumé

Ainsi, l'invention prévoit un système de freinage d'au moins une première roue d'un véhicule automobile comprenant un premier frein, un circuit hydraulique de commande du premier frein et un premier moteur électrique de commande du premier frein actionnables au moins en partie simultanément par un même organe d'actionnement.

Selon un mode de réalisation, le système comprend un capteur adapté à fournir un signal représentatif de l'action du conducteur sur l'organe d'actionnement, un module de traitement adapté à fournir une consigne à partir dudit signal, le premier moteur électrique étant commandé à partir de ladite consigne.

Selon l'invention, le premier frein est à commande hydraulique et à commande mécanique, le circuit hydraulique étant relié à la commande hydraulique du premier frein et le premier moteur électrique étant relié à la commande mécanique du premier frein.

Selon l'invention le circuit hydraulique comprend un maître-cylindre relié à la commande hydraulique du premier frein par au moins une canalisation contenant un liquide de frein, le système de freinage comprenant un mécanisme de liaison reliant l'organe d'actionnement à au moins un piston du maître-cylindre, le mécanisme de liaison ne comprenant pas de servo-frein.

Selon un mode de réalisation, le système comprend un deuxième frein à commande hydraulique et à commande mécanique, le circuit hydraulique étant relié à la commande hydraulique du deuxième frein.

Selon un mode de réalisation, le premier moteur est, en outre, relié à la commande mécanique du deuxième frein.

Selon un mode de réalisation, le système comprend, en outre, un deuxième moteur électrique relié à la commande mécanique du deuxième frein et commandé par l'organe d'actionnement au moins en partie simultanément au circuit hydraulique.

Selon un mode de réalisation, le système comprend un troisième frein à commande hydraulique et à commande mécanique, le circuit hydraulique étant relié à la commande hydraulique du troisième frein.

Selon un mode de réalisation, le premier moteur est, en outre, relié à la commande hydraulique du troisième frein.

Selon un mode de réalisation, le système comprend, en outre, un troisième moteur électrique relié à la commande mécanique du troisième frein et commandé par l'organe d'actionnement au moins en partie simultanément au circuit hydraulique.

Selon un mode de réalisation, le système comprend un quatrième frein à commande hydraulique et à commande mécanique, le circuit hydraulique étant relié à la commande hydraulique du quatrième frein.

Selon un mode de réalisation, le premier moteur est, en outre, relié à la commande hydraulique du quatrième frein.

Selon un mode de réalisation, le système comprend, en outre, un quatrième moteur électrique relié à la commande mécanique du quatrième frein et commandé par l'organe d'actionnement au moins en partie simultanément au circuit hydraulique.

Un mode de réalisation prévoit également un véhicule comprenant au moins une roue et un système de freinage de ladite roue tel que défini précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un exemple classique de système de freinage ;
la figure 2 illustre, de façon schématique, un mode de réalisation d'un système de freinage ;
la figure 3 représente, de façon schématique, un exemple de frein à disque ;
la figure 4 représente, de façon schématique, un exemple de frein à tambour ; et
les figures 5 à 8 représentent des modes de réalisation de systèmes de freinage.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de la présente description ont été représentés et seront décrits. En particulier, la structure du maître-cylindre du circuit hydraulique d'un système de freinage n'a pas été décrite en détail. Dans la suite de la description, sauf indication contraire, les termes "sensiblement", "environ" et "de l'ordre de" signifient "à 10 % près".

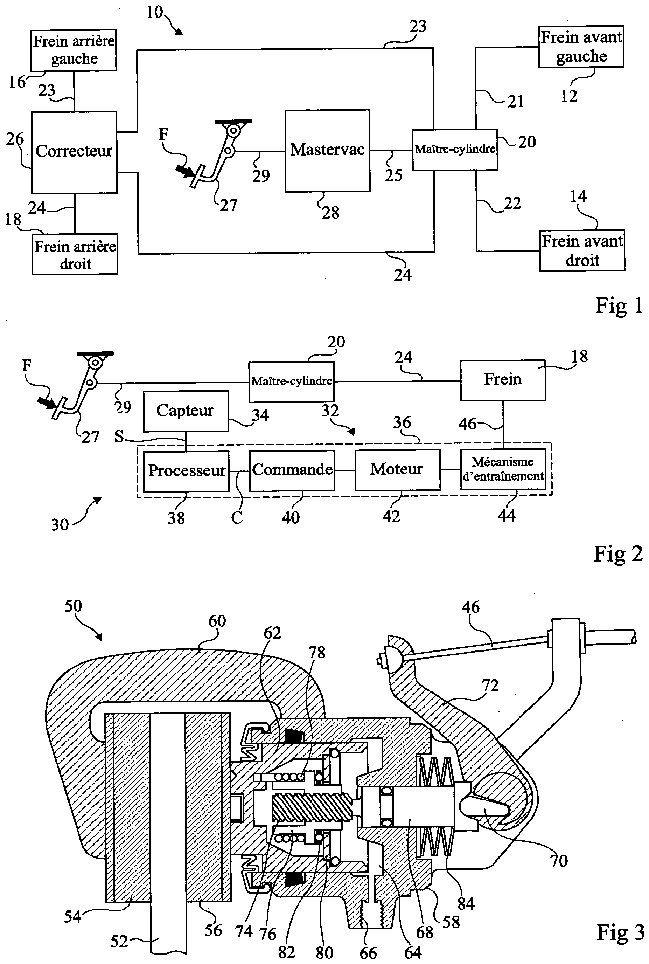

La figure 1 représente un exemple de système de freinage 10. Le système 10 comprend un frein avant gauche 12, un frein avant droit 14, un frein arrière gauche 16 et un frein arrière droit 18 équipant les deux roues avant et les deux roues arrière du véhicule. Les freins 12, 14, 16 et 18 peuvent être des freins à disque ou à tambour. Les freins 12, 14, 16 et 18 sont commandés par un circuit hydraulique contenant un liquide de frein.

Le circuit hydraulique comprend un maître-cylindre 20 relié au frein avant gauche 12 par une conduite 21, au frein avant droit 14 par une conduite 22, au frein arrière gauche 16 par une conduite 23 et au frein arrière droit 18 par une conduite 24. Le maître-cylindre 20 comprend un ou plusieurs pistons, non représentés, susceptibles d'être déplacés par une tige 25. Un déplacement de la tige 25 conduit à un déplacement des pistons dans le maître-cylindre 20, ce qui entraîne une variation de la pression hydraulique dans les freins 12 à 18. Un dispositif de régulation de pression 26, ou correcteur hydraulique, peut être prévu sur les conduites 23 et 24 pour que la pression hydraulique dans les freins arrière 16, 18 soit moins importante que la pression hydraulique dans les freins avant 12, 14.

Le maître-cylindre 20 est actionné par la pédale de frein 27 du véhicule par l'intermédiaire d'un dispositif d'assistance au freinage 28. L'action du conducteur sur la pédale de frein 27 entraîne le déplacement d'une tige de poussée 29 qui commande le dispositif d'assistance au freinage 28. Le dispositif d'assistance au freinage 28 applique un effort à la tige 25 qui correspond à l'effort exercé par le conducteur sur la pédale de frein 27 multiplié par un facteur d'amplification.

Lorsque le conducteur appuie sur la pédale de frein 27, ce qui est illustré par la flèche F, la tige 25 est déplacée par le dispositif d'assistance au freinage 28. Ceci entraîne un déplacement des pistons dans le maître-cylindre 20 et provoque une montée en pression du liquide de frein dans les conduites 21, 22, 23 et 24, actionnant ainsi les freins 12, 14, 16 et 18.

Un inconvénient du système de freinage 10 décrit précédemment est que le dispositif d'assistance au freinage 28 et le dispositif de régulation de pression 26 occupent un volume important. De plus, les coûts de fabrication et d'entretien du dispositif d'assistance au freinage 28 et du dispositif de régulation de pression 26 sont généralement élevés. En outre, le fonctionnement du dispositif d'assistance 28 peut nécessiter la présence d'une pompe à vide qui peut également être volumineuse et présenter un coût important.

Un objet d'un mode de réalisation est de réduire le volume et le nombre de pièces du circuit hydraulique de commande des freins d'un système de freinage.

Un autre objet d'un mode de réalisation est de supprimer le dispositif d'assistance au freinage hydraulique et/ou pneumatique entre la pédale de frein et le maître-cylindre.

La figure 2 illustre le principe de fonctionnement d'un mode de réalisation d'un système de freinage 30. En figure 2, pour plus de simplicité, seul le frein 18 est représenté.

Selon ce mode de réalisation, la tige de poussée 29 entraînée par la pédale de frein 27 est reliée directement aux pistons du maître-cylindre 20. Il n'y a donc pas de dispositif d'assistance au freinage hydraulique et/ou pneumatique interposé entre la tige de poussée 29 et le maître-cylindre 20.

Le système de freinage 30 comprend, en outre, un dispositif d'assistance au freinage 32. Le dispositif 32 comprend un capteur 34 et un système électromécanique d'assistance au freinage 36 relié au capteur 34 et au frein 18.

Le capteur 34 fournit un signal S qui est représentatif de l'action du conducteur sur la pédale 27. Le capteur 34 peut être un capteur mesurant le déplacement de la tige de poussée 29 ou le débattement angulaire de la pédale de frein 27, un capteur mesurant la force exercée par le conducteur sur la pédale de frein 27 ou la force exercée par la pédale de frein 27 sur la tige de poussée 29 ou un capteur de la pression hydraulique dans le maître-cylindre 20.

Le système 36 comprend :
un module de traitement 38 recevant le signal S ;
un module de commande 40 ;
un moteur électrique 42 commandé par le module de commande 40 ;
un mécanisme d'entraînement 44 entraîné par le moteur 42 ; et
un élément de liaison mécanique 46, par exemple un câble, reliant le mécanisme d'entraînement 44 au frein 18.

Le frein 18 peut être commandé de deux façons : par une commande hydraulique ou par une commande mécanique. C'est le cas de la plupart des freins actuels, notamment des freins à disque ou à tambour, qui comprennent généralement, en plus de la commande hydraulique, une commande par câble utilisée de façon classique pour réaliser une fonction de frein de parking. Dans ce cas, l'élément de liaison 46 du dispositif d'assistance 32 est relié à la commande par câble du frein 18.

Le module de traitement 38 comprend, par exemple, un microcontrôleur. Le module de traitement 38 peut, en outre, comprendre une mémoire dans laquelle est stockée une suite d'instructions qui commandent le fonctionnement du module de traitement 38. A titre de variante, le module de traitement 38 peut être réalisé par un circuit électronique dédié. Le module de traitement 38 est adapté à fournir une consigne C au module de commande 40 du moteur électrique 42, notamment en fonction du signal S. A titre d'exemple, la consigne C est d'autant plus élevée que l'action exercée par le conducteur sur la pédale de frein 27 est importante.

Le module de commande 40 comprend, par exemple, un circuit adapté à commander le couple et/ou la vitesse de rotation du moteur électrique 42 en fonction de la consigne C, par exemple en adaptant le courant et/ou la tension d'alimentation du moteur 42.

Le moteur électrique 42 peut être alimenté par une source d'énergie électrique, par exemple obtenue à partir de la tension fournie par la batterie du véhicule. Le moteur électrique 42 est, par exemple, un moteur tournant, notamment un moteur tournant à courant continu. Le moteur électrique 42 est adapté à exercer, par l'intermédiaire du mécanisme d'entraînement 44, une traction sur le câble de serrage 46 du frein 18 dont l'intensité dépend de la consigne C.

Le mécanisme d'entraînement 44 est situé entre le moteur électrique 42 et le câble 46. Il a pour fonction de transformer le mouvement de rotation du moteur électrique 42 en mouvement de translation du câble 46. Il peut s'agir d'un mécanisme d'entraînement à crémaillère ou d'un mécanisme d'entraînement du type vis/écrou. De préférence, il s'agit d'un mécanisme d'entraînement réversible de façon à permettre le retour en position de repos du câble 46 lorsque le moteur électrique 42 n'est pas alimenté. Le câble 46 est relié à une extrémité à un levier situé dans le frein 18, comme cela est décrit plus en détail par la suite, et est relié, à l'extrémité opposée, au mécanisme d'entraînement 44.

Le dispositif d'assistance 32 est adapté à commander une action de freinage du frein 18 simultanément à l'action de freinage commandée par le maître-cylindre 20.

Selon un mode de réalisation, le dispositif d'assistance 32 comprend, en outre, un capteur de force, non représenté en figure 2, adapté à fournir au module de traitement 38 un signal représentatif de l'intensité de la traction exercée sur le câble 46. Le module de traitement 38 met alors en oeuvre une boucle de rétroaction de façon à adapter la valeur de la consigne C en fonction de l'intensité de la traction réellement exercée sur le câble.

La figure 3 représente un mode de réalisation d'un frein à disque 50 pouvant correspondre au frein 18 de la figure 2. Le frein 50 comprend au moins un disque 52 entraîné en rotation par la roue du véhicule, non représentée, et situé entre deux plaquettes de frein 54, 56. Le frein 50 comprend un cylindre 58 relié à la plaquette de frein 54 par un étrier 60. Un piston 62 est monté libre en coulissement dans le cylindre 58. Le piston 62 définit avec le cylindre 58 une chambre 64 remplie du liquide de frein et qui communique avec la conduite 24, non représentée en figure 3, par une ouverture 66. Le frein 50 comprend, en outre, un axe 68 monté coulissant sur le cylindre 58 et susceptible d'être déplacé en translation par rapport au cylindre 58 par l'intermédiaire d'un poussoir 70 actionné par un levier 72. Le levier 72 peut être pivoté par l'intermédiaire du câble 46. L'extrémité de l'axe 68 comprend une portion filetée 74. Un écrou 76 est disposé sur la portion filetée 74. Un ressort de torsion 78 vient en appui contre le piston 62 à une extrémité et en appui contre l'écrou 76 à l'extrémité opposée. Le frein 50 comprend, en outre, une rondelle 80, fixe par rapport au piston 62, et une butée à bille 82, entre l'écrou 76 et la rondelle 80. Un moyen de rappel élastique 84, comprenant par exemple des rondelles Belleville, relie une extrémité de l'axe 68 au cylindre 58. Le système comprenant l'écrou 76, le ressort 78, la rondelle 80 et la butée 82 est un système de compensation de l'usure des plaquettes.

Le fonctionnement de la commande hydraulique du frein 50 est le suivant. Sous l'action de la pression du liquide de frein pénétrant dans la chambre 64, le piston 62 se déplace dans le cylindre 58 et pousse la plaquette 56 contre le disque 52. Par réaction, l'étrier 60 se déplace à son tour jusqu'au contact de la deuxième plaquette 54 sur l'autre face du disque 52. Au cours de la course du piston 62, la rondelle 80 peut venir en butée contre la butée à bille 82. Si la course du piston 62 est importante, l'écrou 76 peut être entraîné par la butée à bille 82 et la rondelle 80. Le déplacement de l'écrou 76 entraîne une rotation de celui-ci autour de la portion filetée 74 qui est immobilisée en rotation par le poussoir 70 et le levier 72. La rotation de l'écrou 76 est facilitée par le ressort 78 solidaire du piston 76 et sollicité dans le sens du déroulement de ses spires. Au défreinage, le ressort 78 est sollicité dans le sens de l'enroulement de ses spires et immobilise l'écrou 76 en rotation.

Le fonctionnement de la commande mécanique du frein 50 est le suivant. Une traction sur le câble 46 entraîne un pivotement du levier 72. Sous l'action du levier 72 et du poussoir 70, l'axe 68 se déplace par rapport au cylindre 58 jusqu'à ce que l'écrou 76 vienne en contact avec le piston 62. L'axe 68 entraîne alors le coulissement du piston 62 dans le cylindre 58. Ceci entraîne la mise en contact de la plaquette 56 avec le disque 52. Lorsque la traction sur le câble 46 cesse, le levier 72 reprend sa position initiale sous l'effort de rappel des rondelles 84. Le système vis/écrou 74, 76 permet de tenir compte de l'usure des plaquettes 54, 56. En effet, selon l'usure du système, le ressort 78 dévisse plus ou moins l'écrou 76, ce qui permet d'augmenter la longueur de course afin de rattraper l'usure des plaquettes.

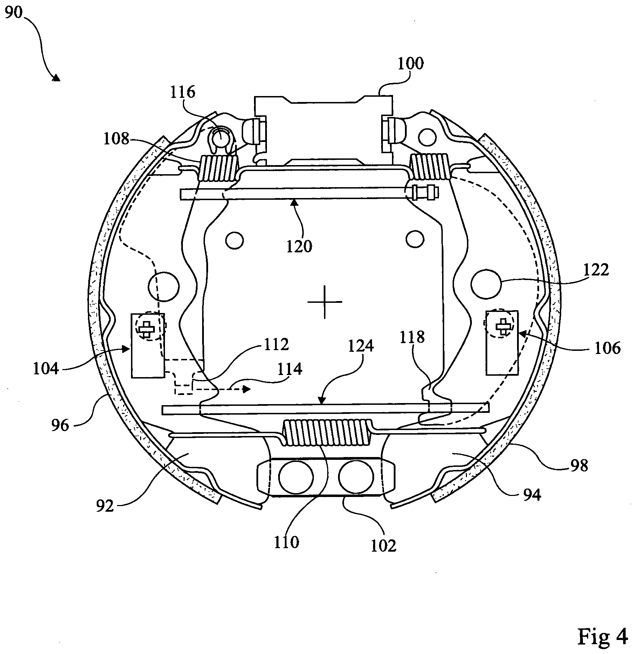

La figure 4 représente un mode de réalisation d'un frein à tambour 90 pouvant correspondre au frein 18 de la figure 2. Le frein 90 est monté sur un support, non représenté, fixe par rapport à l'armature du véhicule. Le frein 90 comprend deux segments de frein 92, 94, chaque segment de frein 92, 94 étant muni d'une garniture 96, 98. Le frein 90 comprend un cylindre récepteur 100, fixé au support et relié à une extrémité supérieure de chaque segment de frein 92, 94. Le cylindre 100 est, en outre, relié au circuit hydraulique du système de freinage. Les extrémités inférieures des segments de frein 92, 94 peuvent venir en butée contre un guide 102 fixé au support. Les segments de frein 92, 94 sont reliés au support par l'intermédiaire de ressorts d'ancrage 104, 106 permettant un déplacement d'amplitude limitée des segments de frein 92, 94 par rapport au support. Les extrémités supérieures des segments de frein 92, 94 sont reliées l'une à l'autre par un ressort 108 et les extrémités inférieures de segments de frein 92, 94 sont reliées l'une à l'autre par un ressort 110.

Le frein 90 comprend en outre un levier 112 sur lequel le câble 46 est adapté à exercer une force selon la flèche 114. Le levier 112 est monté pivotant par rapport au segment de frein 92 au niveau d'une liaison à pivot 116. Le levier 112 est relié à un levier supplémentaire 118 par l'intermédiaire d'un mécanisme d'ajustement 120 qui permet de compenser l'usure des garnitures 96, 98. Le levier supplémentaire 118 est monté libre en rotation par rapport au segment de frein 94 autour d'une liaison à pivot 122. Le levier supplémentaire 118 est relié au segment de frein 92 par une biellette 124.

Le fonctionnement de la commande hydraulique du frein 90 est le suivant. Lorsqu'une surpression de liquide de frein pénètre dans le cylindre 100, ceci entraîne un déplacement des pistons du cylindre 100 qui provoque l'écartement des extrémités supérieures des segments de frein 92, 94. Les garnitures 96, 98 viennent en contact avec le tambour, non représenté, de la roue du véhicule pour réaliser l'opération de freinage. Lorsque la pression du liquide de frein chute, les segments sont ramenés en position de repos par les ressorts de rappel 108, 110.

Le fonctionnement de la commande mécanique du frein 90 est le suivant. Une traction sur le câble 46 entraîne un pivotement du levier de freinage 112 autour de la liaison à pivot 116. Ceci entraîne, par le biais du mécanisme d'ajustement 120, un pivotement du levier secondaire 118 et un déplacement de la biellette 114, d'où il résulte un écartement des segments de frein 92, 94 jusqu'à ce que les garnitures 96, 98 viennent au contact du tambour de la roue. Lorsque la traction sur le câble 46 cesse, les segments sont ramenés en position de repos par les ressorts de rappel 108, 110.

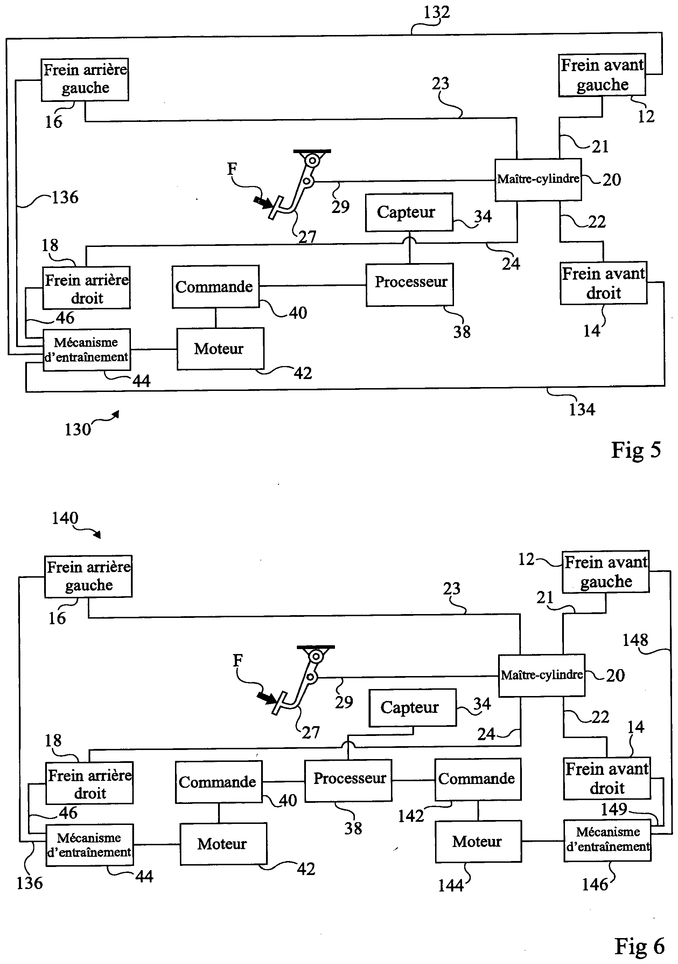

La figure 5 représente un mode de réalisation d'un système de freinage 130 dans lequel le dispositif d'assistance comprend un seul moteur électrique pour les quatre freins 12, 14, 16 et 18 du véhicule. Dans ce cas, en plus d'être relié au frein 18 par le câble 46, le mécanisme d'entraînement 44 est relié au frein 12 par un câble 132, au frein 14 par un câble 134 et au frein 16 par un câble 136.

La figure 6 représente un mode de réalisation d'un système de freinage 140 dans lequel, par rapport au système de freinage 130 représenté en figure 5, le mécanisme d'entraînement 44 est relié seulement au frein arrière gauche 16 et au frein arrière droit 18. Le dispositif d'assistance comprend, en outre, un module de commande 142 relié au module de traitement 38, un moteur 144 commandé par le module de commande 142 et un mécanisme d'entraînement 146 relié au moteur 144. Le module de commande 142, le moteur 144 et le mécanisme d'entraînement 146 sont analogues respectivement au module de commande 40, au moteur 42 et au mécanisme d'entraînement 44. Le mécanisme d'entraînement 146 est, par exemple, relié au frein avant gauche 12 par un câble 148 et au frein avant droit 14 par un câble 149.

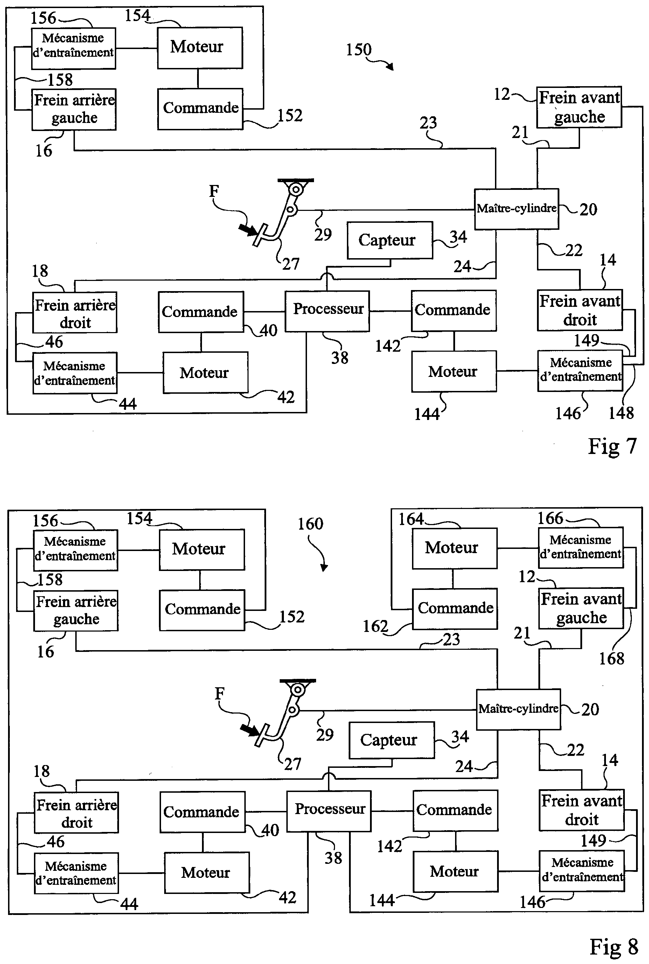

La figure 7 représente un autre mode de réalisation d'un système de freinage 150 dans lequel, par rapport au système de freinage 140 représenté en figure 6, le mécanisme d'entraînement 44 est relié seulement au frein arrière droit 18. Le dispositif d'assistance au freinage comprend, en outre, un module de commande 152 relié au module de traitement 38, un moteur 154 commandé par le module de commande 152 et un mécanisme d'entraînement 156 relié au moteur 154. Le module de commande 152, le moteur 154 et le mécanisme d'entraînement 156 sont analogues respectivement au module de commande 40, au moteur 42 et au mécanisme d'entraînement 44. A titre d'exemple, le mécanisme d'entraînement 156 est relié seulement au frein arrière gauche 16 par un câble 158.

La figure 8 représente un autre mode de réalisation d'un système de freinage 160 dans lequel, par rapport au système de freinage 150 représenté en figure 7, le mécanisme d'entraînement 146 est relié seulement au frein avant droit 14. Le dispositif d'assistance au freinage comprend, en outre, un module de commande 162 relié au module de traitement 38, un moteur 164 commandé par le module de commande 162 et un mécanisme d'entraînement 166 relié au moteur 164. Le module de commande 162, le moteur 164 et le mécanisme d'entraînement 166 sont analogues respectivement au module de commande 40, au moteur 42 et au mécanisme d'entraînement 44. A titre d'exemple, le mécanisme d'entraînement 166 est relié seulement au frein avant gauche 12 par un câble 168.

Les modes de réalisation de systèmes de freinage 30, 130, 140, 150, 160 décrits précédemment permettent de réaliser une fonction d'assistance au freinage. De façon avantageuse, ils peuvent être mis en oeuvre avec des freins classiques comprenant une commande hydraulique, utilisée de façon classique pour les opérations de freinage lorsque le véhicule est en mouvement, et une commande mécanique, par exemple par câble, utilisée de façon classique pour réaliser une fonction de frein de parking. Toutefois, selon les présents modes de réalisation du système de freinage, la commande mécanique est, en outre, utilisée pour réaliser la fonction d'assistance au freinage lorsque le véhicule est en mouvement, c'est-à-dire de façon conjointe avec la commande hydraulique.

Le système de freinage 30, 130, 140, 150, 160 peut, en outre, être utilisé pour réaliser une fonction de frein de parking. La commande mécanique des freins peut être actionnée par un bouton, placé par exemple sur la console centrale derrière le levier de vitesse. Ceci permet, de façon avantageuse, de libérer l'emplacement prévu habituellement pour le levier de frein à main. La fonction de frein de parking est obtenue par l'actionnement du moteur électrique ou des moteurs électriques sur les freins des essieux arrière et/ou avant. A titre d'exemple, dès que le conducteur appuie sur le bouton de frein de parking, le moteur électrique ou les moteurs électriques exercent une traction sur les câbles, ce qui actionne les freins.

Selon un mode de réalisation, le véhicule peut, en outre, comprendre un capteur d'inclinaison qui est utilisé pour détecter l'inclinaison de la chaussée. Pour réaliser la fonction de frein de parking, la force de traction à exercer sur les câbles peut alors être déterminée par le module de traitement 38 en fonction de cette inclinaison. A titre d'exemple, le serrage est d'autant plus élevé que l'inclinaison est prononcée. Pour réaliser la fonction de frein de parking, le dispositif d'assistance au freinage comprend, en outre, des verrous adaptés à empêcher le retour en position de repos des câbles lorsque le moteur électrique ou les moteurs électriques ne sont plus alimentés en courant. Le verrou peut alors être déverrouillé lorsque le conducteur désactive le frein de parking.

Le système de freinage 30, 130, 140, 150, 160 peut, en outre, être utilisé pour réaliser une fonction d'aide au démarrage en côte. Une telle fonction permet d'éviter que la voiture ne recule ou ne cale lors d'un démarrage en côte. Pour réaliser cette fonction, le véhicule comprend, en outre, un capteur ou plus adapté à indiquer au module de traitement 38 que le conducteur a l'intention de démarrer. A titre d'exemple, le véhicule comprend un capteur logé sur la pédale d'embrayage adapté à fournir au module de traitement 38 un signal représentatif du fait que le conducteur appuie sur la pédale d'embrayage et/ou un autre capteur logé dans la boîte de vitesse adapté à fournir au module de traitement 38 un signal représentatif du fait que le conducteur enclenche un rapport de vitesse. En outre, le module de traitement 38 peut recevoir un signal représentatif du couple moteur appliqué aux roues. En fonction de l'ensemble de ces données, le module de traitement 38 peut commander l'application d'une force adaptée aux câbles de commande des freins.

Le système de freinage 30, 130, 140, 150, 160 peut, en outre, être utilisé pour réaliser une fonction de frein moteur. A tire d'exemple, la fonction de frein moteur par le système de freinage peut être réalisée lorsque la batterie du véhicule est complètement chargée pour que le conducteur ait les mêmes sensations de conduite indépendamment de l'état de charge de la batterie. En effet, lorsque la batterie est en cours de charge, le conducteur ressent un freinage qui est dû à la portion de l'énergie, fournie par le moteur d'entraînement des roues du véhicule, utilisée pour entraîner l'alternateur rechargeant la batterie alors que ce freinage est absent lorsque la batterie est complètement chargée.

Dans ce but, le module de traitement 38 peut adapter la force de serrage des freins 12, 14, 16, 18 en fonction de la force de freinage due à la charge de la batterie. Lorsque le conducteur lève le pied de la pédale d'accélérateur et que la batterie est complètement chargée, le dispositif d'assistance au freinage peut fournir une force de freinage pour remplacer la force de freinage qui serait présente si la batterie était en cours de charge. Dans les modes de réalisation décrits précédemment aux figures 6, 7 et 8, l'effort de freinage peut être prévu uniquement sur les roues avant. Ceci permet avantageusement au conducteur d'avoir exactement la même sensation de conduite, pour un véhicule à traction avant, que lorsque le frein moteur est présent.

Le système de freinage 30, 130, 140, 150, 160 peut, en outre, jouer le rôle d'un système anti-blocage des roues ou ABS (sigle anglais pour Anti-lock Braking System). Le module de traitement 38 est alors adapté à commander la diminution, voire l'arrêt, de l'action de freinage exercée par le frein sur la roue correspondante dans le cas où cette roue est sur le point d'être complètement bloquée par le frein.

Sur un système de freinage classique à commande hydraulique tel que représenté en figure 1, la fonction d'anti-blocage des roues est obtenue par des groupes hydrauliques supplémentaires permettant de réguler la pression régnant dans les cylindres récepteurs des freins afin que les roues restent dans une plage de glissement située généralement entre 10 % et 30 %.

Dans le mode de réalisation représenté en figure 8 dans lequel le dispositif d'assistance au freinage peut effectuer un freinage indépendant pour chaque roue, le véhicule peut comprendre un capteur de vitesse de rotation pour chaque roue fournissant au module de traitement 38 un signal représentatif de la vitesse de rotation de la roue. Le module de traitement 38 est adapté, à partir de l'information issue du capteur de vitesse, à commander indépendamment chaque moteur électrique 42, 144, 154, 164 de façon à réduire la force d'assistance au freinage si la roue associée est sur le point de se bloquer. Dans les modes de réalisation représentés aux figures 5, 6 et 7 dans lesquels une action de freinage est réalisée simultanément au moins sur deux roues, une fonction d'antiblocage de ces roues peut être prévue de façon globale sur ces roues même si seulement l'une d'entre elles tend à se bloquer.

Le système de freinage 30, 130, 140, 150, 160 peut, en outre, permettre de réaliser une fonction de correction de freinage. En effet, lors d'un freinage, il se produit un phénomène de transfert de masse de l'arrière vers l'avant du véhicule. Ceci peut entraîner un blocage des roues arrière si l'action de freinage sur ces roues est trop importante. Sur un système de freinage hydraulique classique, comme celui représenté en figure 1, le correcteur hydraulique 26 est prévu pour diminuer la pression du liquide de frein transmise aux freins arrière. Dans les modes de réalisation décrits précédemment aux figures 5 à 8, le correcteur hydraulique n'est pas présent. Pour le mode de réalisation décrit précédemment en figure 5, la différence entre les intensités de freinage des freins arrière et des freins avant peut être obtenue par un mécanisme d'adaptation au niveau du mécanisme d'entraînement 44 ou par des structures différentes de leviers au niveau des freins arrière 16, 18 par rapport aux freins avant 12, 14. Pour les modes de réalisation décrit précédemment aux figures 6 à 8, la différence entre les intensités de freinage des freins arrière et des freins avant peut être réalisée par le module de traitement 38 qui commande indépendamment le moteur électrique ou les moteurs électriques associés aux roues avant et le moteur électrique ou les moteurs électriques associés aux roues arrière. En outre, la différence d'assistance de freinage entre les freins arrière et les freins avant peut être adaptée en fonction du chargement du véhicule.

Le système de freinage 30, 130, 140, 150, 160 peut, en outre, permettre de réaliser une fonction d'aide au freinage d'urgence. Le véhicule comprend alors, en outre, un capteur, par exemple un capteur de vitesse ou d'accélération, au niveau de la pédale de frein 27, adapté à fournir au module de traitement 38 un signal représentatif de la rapidité avec laquelle le conducteur appuie sur la pédale de frein. Le module de traitement 38 peut alors détecter une situation d'urgence lorsque la vitesse d'appui du conducteur sur la pédale de frein 27 dépasse un seuil. Le module de traitement 38 peut alors commander l'obtention d'un effort de freinage maximal le plus rapidement possible.

A titre de variante, une batterie de secours en plus de la batterie principale du véhicule peut être prévue afin de garantir l'utilisation du dispositif d'assistance au freinage en cas de panne électrique du véhicule.

Des modes de réalisation particuliers ont été décrits. Diverses variantes et modifications apparaîtront à l'homme de l'art. En particulier, bien que dans les modes de réalisation décrits précédemment il soit décrit l'utilisation d'une pédale de frein, il est clair que les présents modes de réalisation peuvent être mis en oeuvre avec tout type d'organe d'actionnement de freinage, par exemple une commande manuelle au volant. En outre, bien que dans les modes de réalisation décrits précédemment il soit décrit l'utilisation de moteurs électriques tournants, il est clair que les présents modes de réalisation peuvent être mis en oeuvre avec des moteurs électriques pas à pas.

## Revendications

1. Système de freinage (30 ; 130 ; 140 ; 150 ; 160) d'au moins une première roue d'un véhicule automobile comprenant un premier frein (18), un circuit hydraulique (20, 24) de commande du premier frein et un premier moteur électrique (42) de commande du premier frein actionnables au moins en partie simultanément par un même organe d'actionnement (27), dans lequel le premier frein (18) est à commande hydraulique et à commande mécanique, le circuit hydraulique (20, 24) étant relié à la commande hydraulique du premier frein et le premier moteur électrique (42) étant relié à la commande mécanique du premier frein, et dans lequel le circuit hydraulique comprend un maître-cylindre (20) relié à la commande hydraulique du premier frein (18) par au moins une canalisation (24) contenant un liquide de frein, le système de freinage comprenant un mécanisme de liaison (29) reliant mécaniquement l'organe d'actionnement (27) à au moins un piston du maître-cylindre, le mécanisme de liaison ne comprenant pas de servo-frein.

2. Système de freinage selon la revendication 1, comprenant un capteur (34) adapté à fournir un signal (S) représentatif de l'action du conducteur sur l'organe d'actionnement (27), un module de traitement (38) adapté à fournir une consigne (C) à partir dudit signal, le premier moteur électrique (42) étant commandé à partir de ladite consigne.

3. Système de freinage selon la revendication 1 ou 2, comprenant un deuxième frein (14) à commande hydraulique et à commande mécanique, le circuit hydraulique (20, 22) étant relié à la commande hydraulique du deuxième frein.

4. Système de freinage selon la revendication 3, dans lequel le premier moteur (42) est, en outre, relié à la commande mécanique du deuxième frein (14).

5. Système de freinage selon la revendication 3, comprenant, en outre, un deuxième moteur électrique (144) relié à la commande mécanique du deuxième frein (14) et commandé par l'organe d'actionnement (27) au moins en partie simultanément au circuit hydraulique (20, 22).

6. Système de freinage selon l'une quelconque des revendications 3 à 5, comprenant un troisième frein (16) à commande hydraulique et à commande mécanique, le circuit hydraulique (20, 23) étant relié à la commande hydraulique du troisième frein.

7. Système de freinage selon la revendication 6, dans lequel le premier moteur (42) est, en outre, relié à la commande hydraulique du troisième frein (16).

8. Système de freinage selon la revendication 6, comprenant, en outre, un troisième moteur électrique (154) relié à la commande mécanique du troisième frein (16) et commandé par l'organe d'actionnement (27) au moins en partie simultanément au circuit hydraulique (20, 23).

9. Système de freinage selon l'une quelconque des revendications 6 à 8, comprenant un quatrième frein (12) à commande hydraulique et à commande mécanique, le circuit hydraulique (20, 21) étant relié à la commande hydraulique du quatrième frein.

10. Système de freinage selon la revendication 9, dans lequel le premier moteur est, en outre, relié à la commande hydraulique du quatrième frein (12).

11. Système de freinage selon la revendication 9, comprenant, en outre, un quatrième moteur électrique (164) relié à la commande mécanique du quatrième frein (12) et commandé par l'organe d'actionnement (27) au moins en partie simultanément au circuit hydraulique (20, 21).

12. Véhicule comprenant au moins une roue et un système de freinage de ladite roue selon l'une quelconque des revendications 1 à 11.

## Patentansprüche

1. Bremssystem (30; 130; 140; 150; 160) für mindestens ein erstes Rad eines Motorfahrzeugs, das folgendes aufweist: Eine erste Bremse (18), einen Hydraulikkreislauf (20, 24) zum Steuern der ersten Bremse und einen ersten Elektromotor (42) zum Steuern der ersten Bremse, wobei der Kreislauf und der Motor zumindest teilweise simultan von demselben Betätigungsglied (27) betätigt werden, wobei die erste Bremse (18) hydraulisch und mechanisch gesteuert ist und der Hydraulikkreislauf (20, 24) mit dem hydraulischen Steuersystem der ersten Bremse verbunden wird und der erste Elektromotor (42) mit dem mechanischen Steuersystem der ersten Bremse verbunden ist, und wobei der Hydraulikkreislauf einen Hauptzylinder (20) aufweist, der mit dem hydraulischen Steuersystem der ersten Bremse (18) durch mindestens ein Rohr (24), das eine Bremsflüssigkeit enthält, verbunden ist, wobei das Bremssystem einen Verbindungsmechanismus (29) aufweist, der das Betätigungsglied (27) mechanisch mit mindestens einem Kolben des Hauptzylindersverbindet, und wobei der Verbindungsmechanismus keine Servo-Bremse aufweist.

2. Bremssystem nach Anspruch 1, das ferner folgendes aufweist: Einen Sensor (34), der in der Lage ist, ein Signal (S) bereitzustellen, das repräsentativ ist für die Fahrerhandlung an dem Betätigungsglied (27), eine Prozesseinheit (38), die in der Lage ist, einen Sollwert (C) von dem Signal bereitzustellen, und einen ersten Elektromotor (42), der basierend auf dem Sollwert gesteuert wird.

3. Bremssystem nach Anspruch 1 oder 2, das ferner eine zweite hydraulisch und mechanisch kontrollierte Bremse (14) aufweist, wobei der Hydraulikkreislauf (20, 22) mit dem hydraulischen Steuersystem der zweiten Bremse verbunden ist.

4. Bremssystem nach Anspruch 3, wobei der erste Motor (42) ferner mit dem mechanischen Steuersystem der zweiten Bremse (14) verbunden ist.

5. Bremssystem nach Anspruch 3, das ferner einen zweiten Elektromotor (144) aufweist, der mit dem mechanischen Steuersystem der zweiten Bremse (14) verbunden ist und der von dem Betätigungsglied (27) gesteuert wird, und zwar zumindest teilweise simultan mit dem Hydraulikkreislauf (20, 22).

6. Bremssystem nach einem der Ansprüche 3 bis 5, das eine dritte hydraulisch und mechanisch kontrollierte Bremse (16) aufweist, wobei der Hydraulikkreislauf (20, 23) mit dem hydraulischen Steuersystem der dritten Bremse verbunden wird.

7. Bremssystem nach Anspruch 6, wobei der erste Motor (42) ferner mit dem hydraulischen Steuersystem der dritten Bremse (16) verbunden ist.

8. Bremssystem nach Anspruch 6, das ferner einen dritten Elektromotor (154) aufweist, der mit dem mechanischen Steuersystem der dritten Bremse (16) verbunden ist und der von dem Betätigungsglied (27) gesteuert wird, und zwar zumindest teilweise simultan mit dem Hydraulikkreislauf (20, 23).

9. Bremssystem nach einem der Ansprüche 6 bis 8, das eine vierte hydraulisch und mechanisch kontrollierte Bremse (12) aufweist, wobei der Hydraulikkreislauf (20, 21) mit dem hydraulischen Steuersystem der vierten Bremse verbunden ist.

10. Bremssystem nach Anspruch 9, wobei der erste Motor ferner mit dem hydraulischen Steuersystem der vierten Bremse (12) verbunden ist.

11. Bremssystem nach Anspruch 9, das ferner einen vierten Elektromotor (164) aufweist, der mit dem mechanischen Steuersystem der vierten Bremse (12) verbunden ist und der von dem Betätigungsglied (27) gesteuert wird, und zwar zumindest teilweise simultan mit dem Hydraulikkreislauf (20, 21).

12. Fahrzeug, das mindestens ein Rad und ein System zum Bremsen des Rades nach einem der Ansprüche 1 bis 11 aufweist.

## Claims

1. A braking system (30; 130; 140; 150; 160) for at least one first wheel of a motor vehicle comprising a first brake (18), a hydraulic circuit (20, 24) for controlling the first brake and a first electric motor (42) for controlling the first brake, said circuit and said motor being at least partly simultaneously actuable by a same actuation member (27), wherein the first brake (18) is hydraulically controlled and mechanically controlled, the hydraulic circuit (20, 24) being connected to the hydraulic control system of the first brake and the first electric motor (42) being connected to the mechanical control system of the first brake, and wherein the hydraulic circuit comprises a master cylinder (20) connected to the hydraulic control system of the first brake (18) by at least one pipe (24) containing a brake fluid, the braking system comprising a connection mechanism (29) mechanically connecting the actuation member (27) to at least one piston of the master cylinder, the connection mechanism comprising no servo-brake.

2. The braking system of claim 1, comprising a sensor (34) capable of providing a signal (S) representative of the driver's action on the actuation member (27), a processing unit (38) capable of providing a set point value (C) from said signal, the first electric motor (42) being controlled based on said set point value.

3. The braking system of claim 1 or 2, comprising a second hydraulically controlled and mechanically controlled brake (14), the hydraulic circuit (20, 22) being connected to the hydraulic control system of the second brake.

4. The braking system of claim 3, wherein the first motor (42) is further connected to the mechanical control system of the second brake (14).

5. The braking system of claim 3, further comprising a second electric motor (144) connected to the mechanical control system of the second brake (14) and controlled by the actuation member (27) at least partly simultaneously with the hydraulic circuit (20, 22).

6. The braking system of any of claims 3 to 5, comprising a third hydraulically controlled and mechanically controlled brake (16), the hydraulic circuit (20, 23) being connected to the hydraulic control system of the third brake.

7. The braking system of claim 6, wherein the first motor (42) is further connected to the hydraulic control system of the third brake (16).

8. The braking system of claim 6, further comprising a third electric motor (154) connected to the mechanical control system of the third brake (16) and controlled by the actuation member (27) at least partly simultaneously with the hydraulic circuit (20, 23).

9. The braking system of any of claims 6 to 8, comprising a fourth hydraulically controlled and mechanically controlled brake (12), the hydraulic circuit (20, 21) being connected to the hydraulic control system of the fourth brake.

10. The braking system of claim 9, wherein the first motor is further connected to the hydraulic control system of the fourth brake (12).

11. The braking system of claim 9, further comprising a fourth electric motor (164) connected to the mechanical control system of the fourth brake (12) and controlled by the actuation member (27) at least partly simultaneously with the hydraulic circuit (20, 21).

12. A vehicle comprising at least one wheel and a system for braking said wheel of any of claims 1 to 11.
